# EUROPEAN PATENT APPLICATION

(11) **EP 1 022 501 A1**
(43) Date of publication of application: **26.07.2000**
(21) Application number: 00300461.1
(22) Date of filing: 21.01.2000
(51) Int. Cl.: F16L 1/16

(54) **Marine pipeline installation method and apparatus**

(30) Priority: 21.01.1999 US 235117
(71) Applicant: J.Ray McDermott, S.A., New Orleans, Louisiana 70112 (US)
(72) Inventor: Kershenbaum, Naum Yakovlevich, Houston, Texas 77094 (US); John, Joseph, Sugarland, Texas 77479 (US); Light, George Lawrence, Houston, Texas 77079 (US); Mackintosh, Neil Andrew, Katy, Texas 77494 (US)
(74) Representative: Pilch, Adam John Michael

(57) **Abstract**

A marine pipeline installation technique that allows the required length of pipeline (11) to be welded and assembled onshore, with the full pipeline length then being towed for installation. A series of buoyancy balls (18) or cylindrical tanks are attached to the pipeline (11) at selected intervals. The skin of the balls (18) or tanks is fabricated from a soft, strong material. A flexible hose (20) in fluid communication with each buoyancy ball (18) or tank is in fluid communication at each end with a storage tank that contains a buoyancy agent. The buoyancy agent, a light incompressible liquid, is directed into the balls (18) or tanks to cause the pipeline (11) to float a short distance above the seafloor (32). Chains (24) attached to the pipeline (11) at selected intervals maintain contact with the seafloor (32) to stabilize the pipeline (11). Lines (16A,16B) attached to each end of the pipeline (11) are respectively attached to a tow vessel (12) and a service vessel (14) for towing the pipeline (11) to the installation site.

## Description

The invention generally relates to pipeline installation such as pipeline construction and installation in deep water.

Deep water pipeline construction and installation is increasingly becoming high priority in the offshore pipeline business. Offshore projects have been installed in water as deep as 910m (2,990 feet) while other projects are under construction for installation in water as deep as 1,200 m (4,000 feet). Currently, subsea pipelines are being considered for water depths of between 1,830 and 2,740 m (6,000 and 9,000 feet). The exploration in deeper water will lead to an increase in total submerged weights of the pipe due to utilization of pipe-in-pipe assemblies which often become necessary at such extreme depths. Pipelines are currently installed offshore by several methods.

In the S-lay method, pipe joints on a derrick barge are welded into a continuous string and conveyed through a tensioner. Corrosion protection anodes are attached to the pipe string and the pipe string is then gradually lowered onto the seabed over a stinger that extends beyond the end of the barge. The stinger is adjusted to position the pipe at the optimum angle relative to tension and bending moments until the pipe string contacts the sea floor.

A disadvantage of S-lay technology is that the maximum water depth for laying pipe with this technology is practically limited to approximately 610 m (2,000 feet). This maximum limit is typically shallower for heavier pipe, such as large diameter or pipe-in-pipe, installation. This limitation tends to be due to cost problems more than technical difficulties. In order to use this technology in deeper water, a very long, heavy, and expensive stinger, as well as a powerful and expensive tensioner would be required in order to provide the proper support to the pipe.

In reel lay technology, pipe is collected on a special Large reel drum that is installed and secured on a derrick barge. Pipe installation is performed by unreeling the pipe, straightening the pipe, tightening the pipe with a tensioner, and then lowering the pipe through a stinger or ramp in a manner similar to S-lay.

A disadvantage of reel lay technology is that it is limited to the same water depth as S-lay technology. Also, reel lay technology cannot be used for pipe diameter larger than 410 mm (16 inches) or for pipe that is coated with concrete.

In J-lay technology, pipe joints are placed into a tower at a steep angle, the pipe joint is welded onto the pipeline, and the new section is lowered into the water through an extension or stinger at the lower end of the tower. Current J-lay technology can be used to install pipeline in up to 1,220 to 1,520 m (4,000 to 5,000 feet) of water, depending upon pipe properties of weight and flexibility. Lifting capacity in the current J-lay technology is 775 kips (775,000 pounds). However, even these limits will eventually be met as the need to lay pipeline in ever increasing deeper water continues.

Despite its advantages, J-lay technology has disadvantages. The technology has a high cost and is a time consuming process compared to reel and S-lay technology. There are technical/physical limitations in deep water due to excessively high requirements for single A&R (abandonment and recovery) cable capacity 775 kips referenced above). The technology has a high sensitivity to weather vane conditions, which requires a high speed A&R procedure. Pipeline strength requirements during installation for some cases exceed operational requirements due to water depth. The equipment is very heavy and utilizes a large amount of metal. There is no perspective to establish a cost comparison for use of J-lay technology in 3, 050 m (10,000 feet) of water.

In installation by towing, part of the pipeline is assembled and welded into a pipe string and equipped with buoyancy tanks. This is done on or near the shore. The pipe string is then towed by a tow vessel and a hold-back vessel to the installation site. There are several types of tow installation.

Surface or below surface tow: Pipe string buoyancy tanks allow the pipe to be towed close to the water surface, with the following pipe string being lowered by a barge using, for example, S-lay technology. Disadvantages include water depth limitations high sensitivity to weather vane conditions, and exposure to marine traffic.

Off-Bottom tow: This is an adaptation of the below surface tow technique. Buoyancy tanks and pipe stabilizing chains are attached to the pipe string at specified intervals. During towing, the pipe string is near the bottom while the pieces of chain are dragged along the bottom to provide a stabilizing effect to the pipe string relative to the sea floor. A disadvantage includes very high cost to install a pipeline in deep water due to the cost of deep-water buoyancy tanks. Another disadvantage is that a pipeline 16 km (10 miles) or greater in length cannot be installed due to the non-availability of buoyancy during towing and installation.

Rock-Water tow: This technology is similar to the off-bottom tow. In order to provide buoyancy control to the pipe string, progressive motion is used to create a hydrodynamic lifting force in addition to that provided by the buoyancy tanks. Disadvantages include water depth limitations (due to buoyancy tank cost) and the tow vessels must have excess power to continue to move the pipe string after temporary stoppage.

It can be seen from the above that the current state of the art does not adequately address the need for pipeline installation in deeper water depths that will be required in the near future.

Respective aspects of the invention are set out in claims 1, 6, 10, 11, 16 and 19.

A preferred embodiment of the invention provides an apparatus and method for marine pipeline installation that allows the required length of pipeline to be welded and assembled onshore, with the full pipeline length then being towed for installation. A series of buoyancy balls or cylindrical tanks filled with a light, incompressible liquid (lighter than water) are attached to the pipeline at selected intervals. A flexible hose in fluid communication with each buoyancy ball (tank) is in fluid communication at each end with a storage tank chat contains the same liquid buoyant agent. The buoyancy agent is directed into the balls (tanks) to cause the pipeline to float a short distance above the sea floor. Chains attached to the pipeline at selected intervals maintain contact with the seafloor to stabilize the pipeline position. Lines attached to each end of the pipeline are respectively attached to a tow vessel and a service vessel for towing the pipeline to the installation site.

The invention will now be described by way of example with reference to the accompanying drawings, throughout which like parts are referred to by like references, and in which:
Fig. 1 is a schematic illustration of one embodiment of the invention;
Fig. 2 is an enlarged detail view of the area shown in broken lines in Fig. 1 and indicated by the numeral 2;
Fig. 3 is a schematic illustration of an alternative embodiment of the invention; and
Fig. 4 is an enlarged detail view of the area shown in broken lines in Fig. 3 and indicated by the numeral 4.

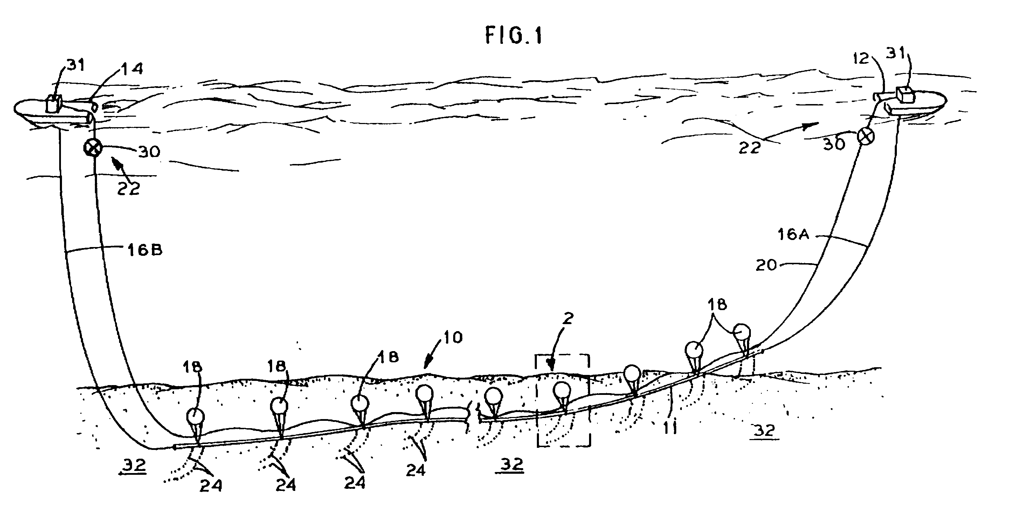

Referring to the drawings, and in particular to Fig. 1, a means 10 for installing an assembled pipeline 11 is generally comprised of a tow vessel 12, a hold-back vessel 14, a pipeline support cable 16, buoyancy balls 18, a hose 20, a means 22 for adjusting the buoyancy of buoyancy balls 18, and chains 24.

Vessels 12 and 14 are each provided with a pipeline support cable 16A and 16B respectively. Pipeline support cable 16A has one end attached to the tow vessel 12 and the opposite end attached to one end of the assembled pipeline 11. Pipeline support cable 16B has one end attached to the hold-back vessel 14 and the opposite end attached to the end of the assembled pipeline opposite that of pipeline support cable 16A. This provides attachments at each end of the assembled pipeline for towing and controlling the assembled pipeline 11 in a manner known in the art. Although the pipeline support is described as a cable, it should be understood that any suitable support, such as a special pipe section, may be used for the towing operation.

A plurality of buoyancy balls 18 are removably attached to the assembled pipeline 11 at intervals that are dependent upon the diameter of the pipe and length of the assembled pipeline. In the preferred embodiment, the buoyancy balls 18 are made from a material that is soft, flexible, strong, and durable. The buoyancy balls are capable of receiving and containing a liquid, incompressible buoyant agent that is lighter than the surrounding water.

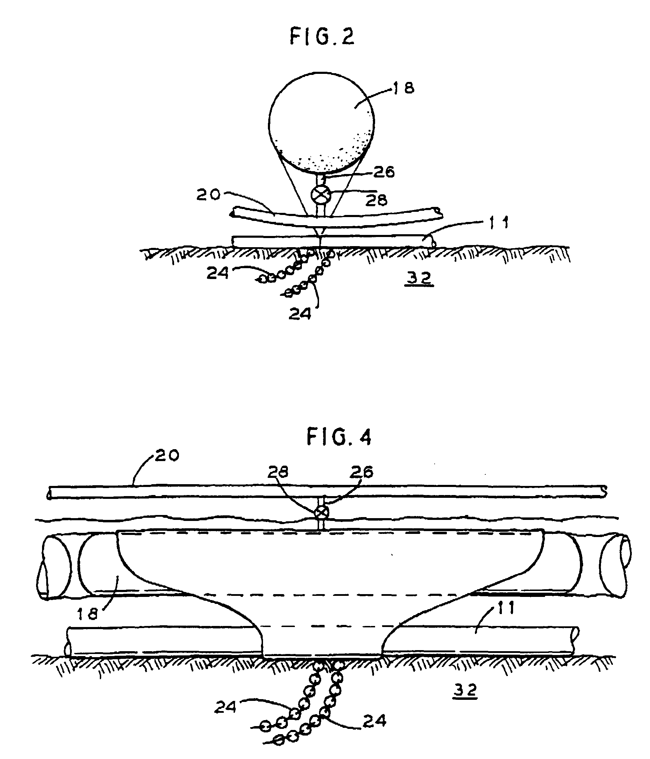

Hose 20 extends between vessels 12 and 14 and is in fluid communication with a buoyant agent storage container (not shown) on each vessel. As seen in Fig. 2, hose 20 is also in fluid comminication with each buoyancy ball 18 via local hose 26 and ball control valve 28. Main control valves 30 are positioned in hose 20 adjacent each vessel for selectively adding or removing buoyant agent from the hose 20 and, consequently, buoyancy balls 18 by ball control valve 28 as desired.

A length of chain 24, two are illustrated, is preferably attached to the assembled pipeline 11 at intervals that correspond to the attachment points off the buoyancy balls 18. The length of the chains 24 is adjusted such that tne chains will make contact with the sea floor 32 when the assembled pipeline 11 is positioned at the desired depth for towing to the offshore Site.

In operation, sections of pipe are welded together end-to-end at an onshore site to form an assembled pipeline 11 of the required length. The assembly site is preferably close to shore. Vessels 12 and 14 are positioned offshore adjacent the assembly site. The pipeline support cable 16A is attached to tow vessel 12 and the first end of the pipeline. Hose 20 is attached to a buoyant agent container in tow vessel 12. A suitable buoyant agent is preferably a light, incompressible liquid such as oil, kerosene, alcohol, etc. Buoyancy balls 18, with local hose 26 and ball control valve 28, are attached to the pipeline at selected intervals as the pipeline is pulled into the water by tow vessel 12. Hose 20 is attached so as to be in fluid communication with each local hose 26 and the buoyant agent container (not shown) on the tow vessel. The main control valve 30 adjacent the tow vessel 12 and bail control valves 28 are opened and a selected volume of buoyant agent is pumped through hose 20 and local hoses 26 into a selected buoyancy ball 18 by the pump 31. The pipeline support cable 16B is attached to the hold-back vessel 14 and the second end of the pipeline as it is completed and nears the water. The main control valve 30 on the hold-back vessel 14 is opened to assist in directing the buoyant agent to the buoyancy balls as necessary. A pump 31 for supplying buoyant agent to the buoyancy balls is provided on each vessel.

The submerged weight of the assembled pipeline 11 is compensated for by the buoyancy balls 18 such that the assembled pipeline 11 is supported a predetermind distance above and near the seafloor 32 as illustrated in Fig. 1. At this predetermined depth, chains 24 contact the seafloor 32 and provide stability to the assembled pipeline 11 as it is towed to the offshore site. If any portions of the assembled pipeline 11 are shallower or deeper than desired, then the amount of buoyant agent in any number of buoyancy balls 18 may be adjusted as necessary. Main control valves 30 and individual ball control valves 28 are opened as necessary to add or remove buoyant agent to adjust buoyancy. Addition of buoyant agent to a buoyancy ball 18 is accomplished by opening the main control valve 30 and the proper ball control valve 18 and pumping buoyant agent by means 31 into the hose 20 and, thus, the correct buoyancy ball 18. Buoyant agent may be removed by opening the main control valve 30 and the ball control valve 18 at the buoyancy ball needing adjustment. Since the buoyancy balls 18 are preferably flexible, the ambient water pressure causes the buoyant agent to flow out of the ball. The main control valves 30 are controlled at the vessels by operators thereon, while the ball control valves 28 are opened or closed through the use of a remotely operated vehicle (ROV). At the installation site, the ball control valves 28 and main control valves 30 are opened to allow the buoyant agent to flow into the storage containers on the vessels, which allows landing of the assembled pipeline 11 on the seafloor. The buoyancy balls 18, hose 20, and chains 24 are detached from the pipeline and retrieved. The pipeline is then attached to the offshore and onshore facilities for fluid communication in a manner known an the art.

Calculations indicate that the preferred technique can be used to install an assembled pipeline that is 32 km (20 miles) long and is formed from pipe having a 500 mm (20 inch) outer diameter with a wall thickness of 32 mm (one and one-quarter inches) in 3,050 m (ten thousand feet) of water. For such a pipeline, the following amount of equipment would be required - 500 buoyancy balls and ball control valves, with each ball having a maximum diameter of 4.5 m (15 feet); 180,000 barrels of liquid buoyant agent with a specific gravity of 0.85; and a hose diameter of 400 mm (16 inches). The buoyancy balls would be attached to the assembled pipeline at intervals of about 60 m (200 feet) and it is estimated that the time required to set the entire pipeline on the seafloor would be approximately twenty hours.

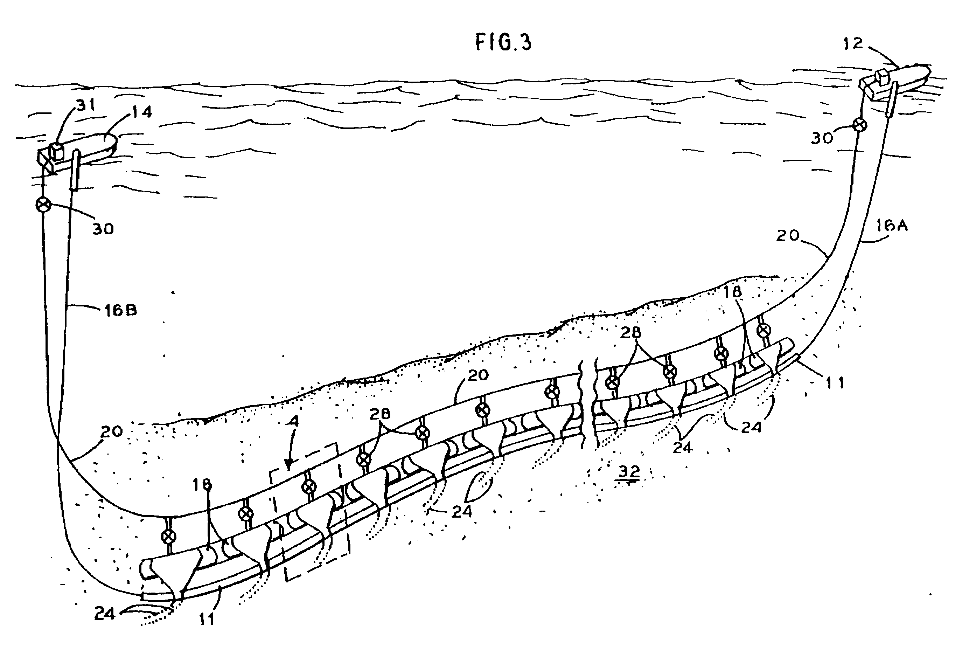

Figs. 3 and 4 illustrate an alternative embodiment of the invention where a cylindrical buoyancy tank 18 is used instead of a buoyancy ball. Because the operation is the same, with the only difference being the shape of the buoyancy means, the control valve 28 should be considered as a tank control valve 28 when referencing Figs. 3 and 4.

The technique provides a number of advantages over the present state of the art. All pipeline joints are welded in a string and assembled on shore, which is a much cheaper and safer procedure than performing such operations offshore. No expensive lay barge is required. Only the two service vessels are required to tow and install the pipeline. There are no physical or technical limits for installation in deeper waters. There is no limitation on pipe size, weight, and virtual arrangement or structural attachments or extensions. There are no weather dictated actions such as pipeline abandonment, and later recovery, because the pipeline is always in position close to the seafloor. Individual adjustment of the buoyancy balls or tanks makes it easy to control the pipeline profile during towing and installation. There is no expensive or unique material or technique required when using the invention.

Because many varying and differing embodiments may be made within the scope of the inventive concept herein taught and because many modifications may be made in the embodiment herein detailed in accordance with the descriptive requirement of the law, it is to be understood that the details herein are to be interpreted as illustrative and not in a limiting sense.

## Claims

1. A method for towing an assembled pipeline to an offshore site, comprising:
a. attaching a pipeline support between a tow vessel and one end of the assembled pipeline;
b. attaching a plurality of buoyancy balls at spaced intervals along the assembled pipeline;
c. positioning a hose along the pipeline such that the hose is in fluid communication with the buoyancy balls and the first end of the hose is in fluid communication with a buoyant agent container on the tow vessel;
d. towing the pipeline offshore toward an installation site;
e. supplying buoyant agent to the buoyancy balls such that the buoyancy balls cause the pipeline to float above and near the seafloor; and
f. lowering the pipeline to the seafloor at a selected offshore site.

2. The method of claim 1, further comprising attaching a length of chain to the pipeline.

3. The method of claim 1, further comprising attaching a second pipeline support between a hold-back vessel and the second end of the assembled pipeline.

4. The method of claim 1, wherein said buoyancy balls are formed from a soft, flexible material.

5. The method of claim 1, further comprising attaching the second end of the hose to the hold-back vessel such that the hose is in fluid communication with a buoyant agent container on the hold-back vessel.

6. An apparatus for using a vessel to tow an assembled pipeline to an offshore site, comprising:
a. support means attached between the tow vessel and one end of the assembled pipeline;
b. a plurality of buoyancy balls attached to the assembled pipeline at spaced intervals;
c. a hose in fluid communication with said buoyancy balls; and
d. means for supplying and removing buoyant agent to and from said buoyancy balls.

7. The apparatus of claim 6, wherein said buoyancy balls are formed from a soft, flexible material.

8. The apparatus of claim 6, further comprising a length of chain attached to the assembled pipeline.

9. The apparatus of claim 6, further comprising:
a. a hold-back vessel;
b. support means attached between said hold-back vessel and the second end of the assembled pipeline; and
c. a valve located in said hose between each of said balls for selectively supplying and removing buoyant agent to and from said cylindrical buoyancy balls.

10. An apparatus for using a vessel to tow an assembled pipeline to an offshore site, comprising:
a. support means attached between the tow vessel and one end of the assembled pipeline;
b. a plurality of buoyancy balls formed from a soft, flexible material that are attached to the assembled pipeline at spaced intervals;
c. a hose in fluid communication with said buoyancy balls;
d. means for supplying and removing buoyant agent to and from said buoyancy balls;
e. a valve located in said hose between each of said balls for selectively supplying and removing buoyant agent to and from said cylindrical buoyancy balls;
f. a length of chain attached to the assembled pipeline;
g. a hold-back vessel; and
h. support means attached between said hold-back vessel and the second end of the assembled pipeline.

11. A method for towing an assembled pipeline to an offshore site, comprising:
a. attaching a pipeline support between a tow vessel and one end of the assembled pipeline;
b. attaching a plurality of cylindrical buoyancy tanks at spaced intervals along the assembled pipeline;
c. positioning a hose along the pipeline such that the hose is in fluid communication with the buoyancy tanks and the first end of the hose is in fluid communication with a buoyant agent container on the tow vessel;
d. towing the pipeline offshore toward an installation site;
e. supplying buoyant agent to the buoyancy tanks such that the buoyancy tanks cause the pipeline to float above and near the seafloor; and
f. lowering the pipeline to the seafloor at a selected offshore site.

12. The method of claim 11, further comprising attaching a length of chain to the pipeline.

13. The method of claim 11, further comprising attaching a second pipeline support between a hold-back vessel and the second end of the assembled pipeline.

14. The method of claim 11, wherein said cylindrical buoyancy tanks are formed from a soft, flexible material.

15. The method of claim 11, further comprising attaching the second end of the hose to the hold-back vessel such that the hose is in fluid communication with a buoyant agent container on the hold-back vessel.

16. An apparatus for using a vessel to tow an assembled pipeline to an offshore site, comprising:
a. support means attached between the tow vessel and one end of the assembled pipeline;
b. a plurality of cylindrical buoyancy tanks attached to the assembled pipeline at spaced intervals;
c. a hose in fluid communication with said cylindrical buoyancy tanks; and
d. means for supplying and removing buoyant agent to and from said cylindrical buoyancy tanks.

17. The apparatus of claim 16, further comprising a length of chain attached to the assembled pipeline.

18. The apparatus of claim 16, further comprising:
a. a hold-back vessel;
b. support means attached between said hold-back vessel and the second end of the assembled pipeline; and
c. a valve located in said hose between each of said tanks for selectively supplying and removing buoyant agent to and from said cylindrical buoyancy tanks.

19. An apparatus for using a vessel to tow an assembled pipeline to an offshore site, comprising:
a. support means attached between the tow vessel and one end of the assembled pipeline;
b. a plurality of cylindrical buoyancy tanks formed from a soft, flexible material that are attached to the assembled pipeline at spaced intervals;
c. a hose in fluid communication with said cylindrical buoyancy tanks;
d. means for supplying and removing buoyant agent to and from said buoyancy balls;
e. a length of chain attached to the assembled pipeline;
f. a hold-back vessel; and
g. support means attached between said hold-back vessel and the second end of the assembled pipeline.

20. The apparatus of claim 18, further comprising a valve located in said hose between each of said tanks for selectively supplying and removing buoyant agent to and from said cylindrical buoyancy tanks.
